# EUROPÄISCHE PATENTSCHRIFT

(11) **EP 0 517 271 B1**
(45) Veröffentlichungstag und Bekanntmachung des Hinweises auf die Patenterteilung: **15.11.1995**
(21) Anmeldenummer: 92109597.2
(22) Anmeldetag: 05.06.1992
(51) Int. Cl.: B65G 1/133

(54) **Träger für ein Horizontalkarussell**
Carrier for a horizontal carrousel
Support pour un carrousel horizontal

(30) Priorität: 05.06.1991 US 710544
(43) Veröffentlichungstag der Anmeldung: 09.12.1992
(73) Patentinhaber: Constructor Lagertechnik GmbH, 51688 Wipperfürth (DE)
(72) Erfinder: Mabrey, Gerald B., Barrington, Illinois 60010 (US)
(74) Vertreter: Herrmann-Trentepohl, Werner, Dipl.-Ing.

(56) Entgegenhaltungen:
- DE-A- 3 904 384
- DE-A- 3 909 139

## Beschreibung

Die vorliegende Erfindung bezieht sich auf eine verbesserte Vorrichtung zum Lagern und zubringen von Artikeln zur Fabrikation, die normalerweise in Trägern gelagert werden und insbesondere auf einen Träger für ein Oberantriebs-Horizontalkarussell, der über seine gesamte Länge bzw. Höhe Artikel aufnehmen kann.

Horizontale Drehkarusselle zum Transport von metallischen Trägern sind bereits bekannt. Normalerweise weisen derartige Karusselle entweder Ober- oder Unterantriebseinheiten auf, die, über eine Übertragungseinrichtung, die Träger, über obere und untere Trageinheiten entlang oberer und unterer Führungseinheiten bewegen. Die Bewegung der Träger folgt einem im wesentlichen elliptischen Pfad oder Weg, der durch die Form der Führungseinheiten bestimmt ist, die bei Karussellen dieser Art üblich ist. Die Führungen haben typischerweise ein Paar von halbkreisförmigen Bereichen, die an den jeweiligen Enden von einem im wesentlichen geraden Bereich montiert bzw. befestigt sind. In den Oberentriebseinheiten von wenigstens einem der halbkreisförmigen Bereiche sind Mittel vorgesehen, um die Bewegung von der Antriebseinheit zu den Trageinheiten, die mit dem jeweiligen Träger verbunden sind, zu übertragen Diese Übertragungsmittel weigert normalerweise wenigstens einen gekerbten Drehtisch oder ein Transportrad auf, der oder das sich drehbar mit- der Antriebseinheit in Eingriff befindet.

Die oberen Trageinheiten weisen jeweils im allgemeinen eine Trägerhülse auf, welche sich mit dem gekerbten Drehtisch in Eingriff befindet, um die Trageinheiten und die Träger, die damit verbunden sind, dazu zu bringen, sich entlang den Führungen zu bewegen. Die Trägerhülse ist derart ausgebildet, um einen sich vertikal erstreckenden Stift aufzunehmen, durch den der Träger an der Trageinheit befestigt ist. Die einzelnen Stifte sind über drehbare oder gelenkige Verbindungsteile miteinander verbunden, um auf diese Weise eine gleichförmige Bewegung der Trageinheiten und der damit verbundenen Träger sicherzustellen. Unterhalb der Gelenkverbindungsglieder ist jedes Paar von Stiften mit einem Lagerstab verbunden, um einen damit verbundenen Träger zu halten. Auf diese Weise wird eine Bewegung- gleichförmig auf jede Trageinheit über die Gelenkverbindungsglieder übertragen, während die damit verbundenen Träger einen Bewegungsbereich unabhängig voneinander haben, dar an den halbkreisförmigen Bereichen der Führungen erforderlich ist.

Der Boden eines jeden Trägers ist typischerweise mit einer unteren Lager- bzw. Trageinheit versehen, die aus einem einfachen Rad- oder Laufrollenmechanismus besteht, der auf der nach außen gerichteten Fläche der unteren Führung läuft, um den Träger in einer korrekten vertikalen Ausrichtung zu halten. Die Räder sind, in Paaren, an einem Befestigungsstab an der Unterseite des Trägers befestigt. Das Gewicht des Trägers wird im wesentlichen ausschließlich von der oberen Trageinheit aufgenommen, während die Räder lediglich dazu vorgesehen sind, die korrekte Ausrichtung des Trägers zu garantieren.

Hierbei ist der Träger zwischen der oberen und der unteren Führung des Karussells gefangen, wobei die Größe des Trägers selbst durch den Raum zwischen der oberen und der unteren Führung begrenzt ist.

Aus diesem Grunde haben bekannte Karusselle dieser Art, wie sie beispielsweise aus DE-A-3 904 384 bekannt sind, den Nachteil, daß die Fläche über der oberen Führung und unter der unteren Führung aufgrund struktureller und räumlicher Zwänge und Probleme normalerweise nicht durch die Träger ausgenutzt werden können. Daher ist es bei derartigen Karussellen unmöglich, den zur Verfügung stehenden Platz in effizienter und vorteilhafter Weise wie möglich auszunutzen, entgegen dem eigentlichen Ziel bzw. der eigentlichen Aufgabenstellung derartiger Einrichtungen.

Ein Ziel der vorliegenden Erfindung ist es, eine neue Trägerbefestigungseinrichtung zur Verfügung zu stellen, welche die volle Ausnutzung des Platzes oberhalb und unterhalb des Karussellaufbaus ermöglicht. Bei Anwendungen mit tiefhängenden Decken kann sich die Trägerhöhe vom Boden bis zur Decke erstrecken, was bei bekannten Einrichtungen dieser Art zur Zeit nicht möglich ist.

Erfindungsgemäß ist die vorliegende Erfindung mit einem oberen Trägerkanal vorsehen, der zwischen der oberen Trageinheit und dem Träger angeordnet ist. Der obere Trägerkanal ist an der oberen Trageinheit über ein Paar von Gelenkteilen oder Trägerstiften befestigt. Der obere Trägerkanal hält über ein Paar von Verlängerungen die Seitenwandungen des Trägers in einem Abstand unterhalb der Oberseite des Trägers.

Desweiteren ist zur Lösung der erfindungsgemäßen Aufgabe vorgesehen, daß die vorliegende Erfindung eine untere Führung des Karussells mit einem unteren Trägerkanal zur Verfügung stellt, der zwischen der unteren Trageinheit und dem Träger angeordnet ist. Der untere Trägerkanal ist an der unteren Trageinheit über ein Paar von Gelenkteilen oder Trägerstiften befestigt. Der untere Trägerkanal ist über ein Paar von Verlängerungen an den Seitenwandungen des Trägers in einem bestimmten Abstand oberhalb des Bodens des Trägers befestigt.

Desweiteren ist in Übereinstimmung mit der vorliegenden Erfindung eine Mehrzahl von Trägerstiften für jeden Träger vorgesehen, die im wesentlichen in einer Linie mit den oberen und unteren Führungen angeordnet sind, und dabei eine erste im wesentlichen vertikale Ebene bestimmen. Die Rückwandung des Trägers bestimmt bzw. bildet eine zweite im wesentlichen vertikale Ebene, welche sich außerhalb der ersten vertikalen Ebene befindet. Der Träger ist nach außen hin in einem Abstand von der oberen und unteren Führung angeordnet, wodurch es dem Träger möglich ist, sich über die obere Führung und unter der unteren Führung zu erstrecken.

Weiterhin kann vorgesehen sein, daß der Träger vollständig außerhalb der Ebene angeordnet ist, welche durch die Trägerstifte, die mit den oberen und unteren Trageinheiten eines vorgegebenen Trägers verbunden sind, bestimmt wird. Der obere und untere Trägerkanal und die damit verbundenen Verlängerungen befreien den Träger von räumlichen Zwängen des Karussells und auf diese Weise wird die Höhe des Trägers nicht durch den Raum zwischen der oberen und der unteren Führung vorbestimmt, wie dies bei den bekannten Karussellen der Fall ist. Hierdurch ist es bei den Trägern nach der vorliegenden Erfindung möglich, eine Höhe zu haben, welche die Höhe des Karussells überschreitet, die vom Boden bis zur Decke gehen kann, wodurch der zur Verfügung stehende Raum, der sonst nicht ausgenutzt wird, genutzt werden kann.

Weitere Merkmale, Ziele, Vorteile und Anwendungsmöglichkeiten der vorliegenden Erfindung ergeben sich aus der nachfolgenden Beschreibung von Ausführungsbeispielen anhand der Zeichnung und der Zeichnung selbst.

Es zeigen:
- Fig. 1: eine perspektivische Explosionsansicht der Trageinheiten und Bauelemente zum Montieren und Verbinden der Träger mit dem Karussell, ohne einen Träger,
- Fig. 2: eine Seitenrißansicht des Karussells und des Trägers nach der vorliegenden Erfindung,
- Fig. 3: eine Draufsicht auf das gekerbts Transportrad und den damit verbundenen Trägern, wobei die Antriebseinheit weggelassen ist,
- Fig. 4: eine Frontansicht in Explosionsdarstellung der oberen Trageinheit nach der vorliegenden Erfindung und
- Fig. 5: eine zusammengebaute Rißansicht der oberen Trageinheit nach der vorliegenden Erfindung.

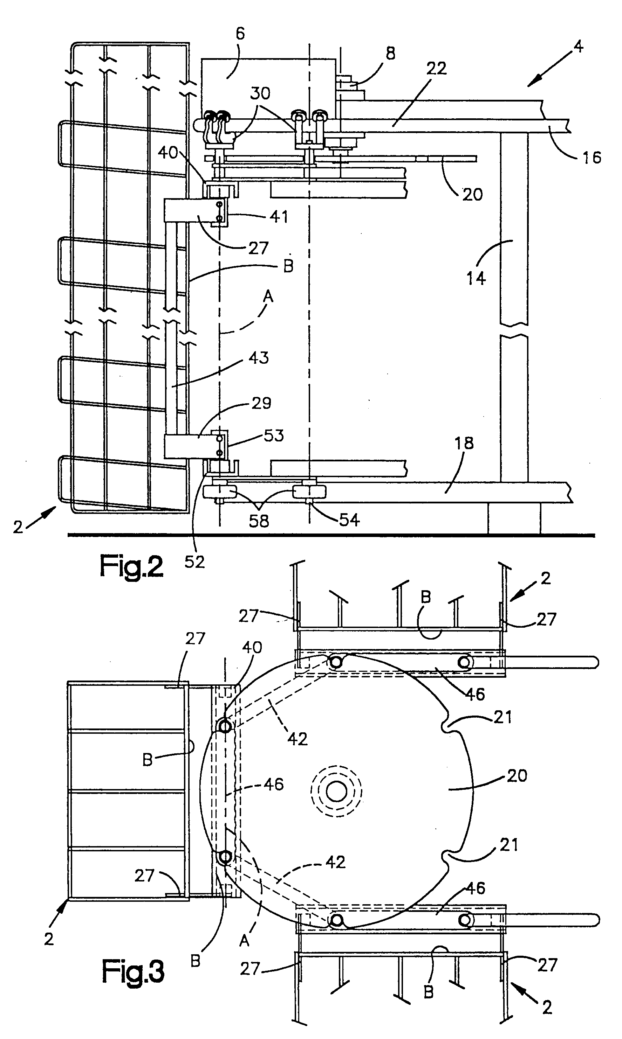

Mit Bezug auf die Fig. 2 ist der Träger 2 und das Karussell 4 der vorliegenden Erfindung dargestellt. Das Karussell 4 weist einen Motor 6 auf, einen Rahmen 14, Antriebsmittel 8 und eine Führungseinrichtung mit oberen und unteren Lager- oder Trageinheiten 10, 12 und oberen und unteren Führungen 16, 18. Der Motor 6, der sich in Eingriff mit den Antriebsmitteln 8 befindet, ist auf den Rahmen 14 auf die Oberseite des Karussellaufbaus oberhalb der oberen Führung 16 montiert.

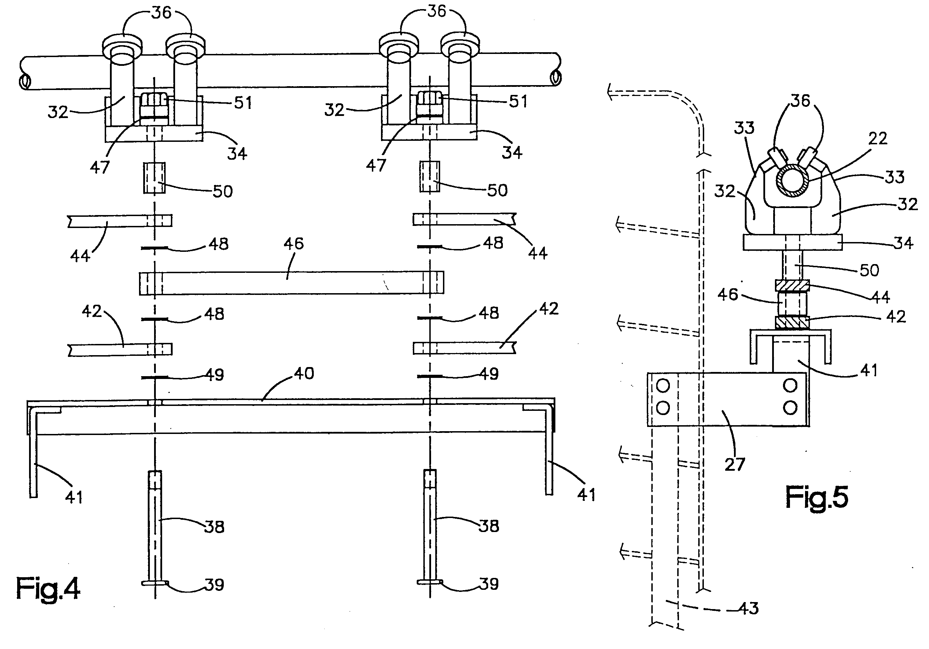

Die Antriebemittel 8, die am besten in den Figuren 2 und 3 gezeigt sind, weisen eine Transportrolle bzw. ein Transportrad 20 auf, das über den Motor 6 drehbar engetrieben wird. Das Transportrad 20 treibt eine Reihe von Trägerbehältern 2 über einen im wesentlichen elliptischen Weg oder Pfad des Karussells an, was im folgenden näher beschrieben wird. Die oberen und unteren Führungen 16, 17 haben jeweils parallele lineare Bereiche und zwei halbkreisförmige Bereiche an den Enden der linearen Bereiche, wodurch ein im wesentlichen elliptischer Weg oder Pfad vorgegeben wird, um den sich die Träger herum bewegen. Die obere Führung 16 weist ein im wesentlichen rohrförmiges Teil 22 auf, das ein Lager für die obere Trageinheit 10 bildet, während der untere Träger 18 eine im wesentlichen flache, nach außen gerichtete Fläche 24 aufweist, gegen die eine Reihe von Rollen 58 mit der unteren Trageinheit 12 drücken bzw. an dieser entlang fahren, wie dies im folgenden näher beschrieben wird.

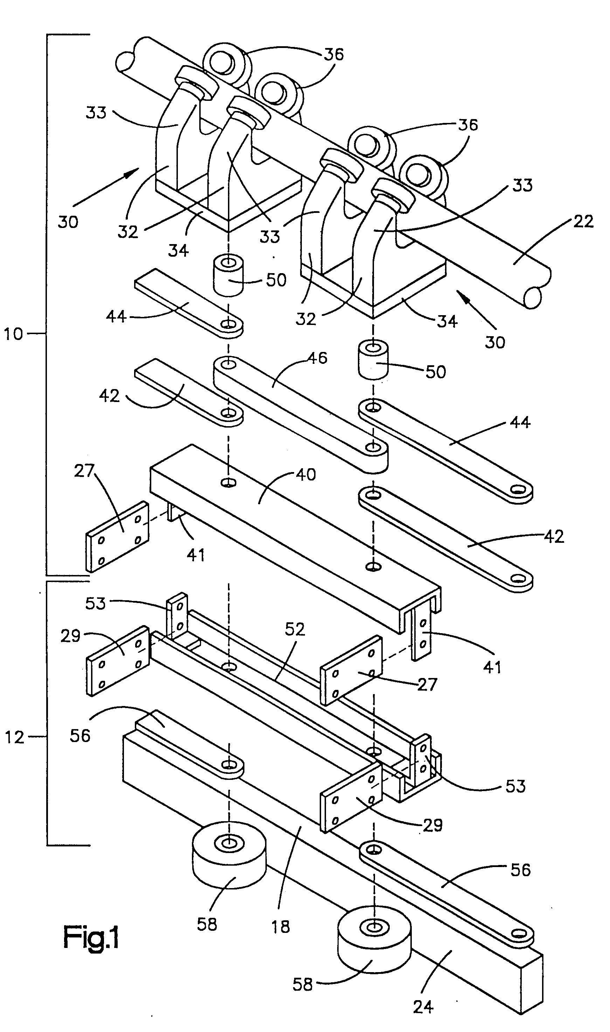

Mit besonderem Bezug auf die Figuren 1, 4 und 5 wird die obere Trageinheit 10 der vorliegenden Erfindung im folgenden näher beschrieben. Die obere Trägereinheit 10 weist ein Tandem-Joch-Teil 30 oder Doppelträgerelement auf, das zwei Paare von Armen 32 aufweist, die sich nach oben bin von einer im wesentlichen planaren oder ebenen unteren Grundplatte 34 erstrecken. Jeder der Arme 32 weist einen nach innen gerichteten Endbereich 33 auf, der mit einer Rolle oder einem Rad 36 an seinem jeweiligen Ende versehen ist. Das Doppelträgerelement 30 umgibt im wesentlichen den rohrförmigen Bereich 22 der oberen Führung 16, wobei die Rollen 36 auf dem Rohr 22 fahren bzw. laufen, um die Bewegung der Lager- oder Trageinheit 10 über dem Karussell 4 zu erleichtern.

Ein oberer Trägerstift 38 erstreckt sich durch einen oberen Trägerkanal 40, obere und untere Zugstäbe oder Zugstangen 44, 42, einen Zugstangenstabilisator 46, eine Trägerhülse und die Grundplatte 34 des Doppeljochs 30 und verbindet diese Teile gleichzeitig miteinander, wie dies am besten in den Figuren 4 und 5 gezeigt ist. Der obere Trägerkanal 40, der dazu vorgesehen und angepaßt ist, um an horizontalen Verlängerungen 27 befestigt zu werden, die den Träger 2 der vorliegenden Erfindung halten und tragen, wie es weiter unten beschrieben wird, stellt ein Paar von im wesentlichen kreisförmigen Öffnungen zur Verfügung, die dazu vorgesehen sind, einen oberen Trägerstift 38 aufzunehmen. Der obere Trägerstift 38 weist einen Flansch oder Kopfbereich 39 auf, der, wenn der Stift vollständig installiert bzw. eingeschoben ist, gegen die untere Oberfläche des oberen Trägerkanals anliegt und dabei den oberen Trägerkanal und den dazugehörigen Träger 2 trägt bzw. hält.

Der Zugatangenstabilisator 46, der zur Verbindung der Doppelträgereinrichtungen 30 vorgesehen ist, die wiederum mit einem üblichen Träger 2 verbunden sind, stellt ein Paar von zylindrischen Öffnungen zur Verfügung, wobei jede der beiden Öffnungen benachbart jedes äußeren Endes des Stabilisators 40 angeordnet sind, um einen Trägerstift 38 aufzunehmen. Jedes Ende des Zugstangenstabilisators 46 ist zwischen einem Paar von etwa ringförmigen Axiallagern 48 aufgenommen bzw. angeordnet und den Enden der Zugstangen 42, 44. Jede der Zugstangen 42, 44 eine oberhalb und eine unterhalb sowie jedes Ende des Zugstangenstabilisators 46 weist zylindrischen,Öffnungen auf, welche den Trägerstift 38 aufnehmen. Zwischen den unteren Oberflächen bzw. Flächen der unteren Zugstange 42 und der oberen Oberfläche des oberen Trägerkanals 40 ist ein Ring- oder Axiallager 49 vorgesehen, durch welches sich der Trägerstift 28 erstreckt. Somit ist jeder Zugstangenstabilisator 46 mit vier Zugstangen, zwei an jedem Ende, verbunden, wie dies klar in den Figuren 1 und 4 gezeigt ist.

Zwischen der oberen Oberfläche der oberen Zugstange und der unteren Oberfläche der Grundplatte 34 befindet sich eine im wesentlichen zylindrische Trägerhülse 50. Die Trägerhülse, die einen zylindrischen Durchgang bildet und dafür vorgesehen ist, den Trägerstift 38 aufzunehmen, verbindet die Zugstange 44 mit der Tandem-Joch-Einheit 30 und stellt eine Eingriffsoberfläche für die gekerbten Öffnungen des Transportrades 20 zur Verfügung, wie dies im folgenden beschrieben wird.

Die Grundplatte 34 der Doppelträgereinrichtung 30 stellt ein im wesentliches kreisförmiges Loch bzw. Öffnung zur Verfügung, um den nach oben gerichteten Trägerstift 38 aufzunehmen. Das äußere Ende des Trägerstiftes erstreckt sich durch ein Axiallager 47, das auf der Oberseite der Grundplatte 34 montiert ist, wobei der Trägerstift mit einer Mutter 51 zusammenwirkt und mit dieser verschraubt werden kann, um den Stift 38 an der Grundplatte 34 zu halten. In dieser Ausführungsform, wie dies am besten in Fig. 5 gezeigt ist, ist die Doppelträgereinrichtung 30 am oberen Trägerkanal 40 befestigt und rollt auf der oberen Führung 16.

In Fig. 2 ist die Doppelträgereinrichtung 30 und der Träger 2 gezeigt, wobei der obere Trägerkanal 40 im wesentlichen horizontal verläuft, sich direkt unterhalb der Doppel-Joch-Einrichtungen erstreckt und mit einem üblichen Träger verbunden ist. Der obere Trägerkanal 40 ist mit einem Paar von nach unten gerichteten Laschen oder Ohren 41 versehen, die sich an nach außen gerichteten Rändern davon befinden. Jede dieser Laschen 41 ist durch eine Schraube oder ein ähnliches Verbindungsmittel an der horizontalen Verlängerung befestigt, die den oberen Trägerkanal mit einem Metallband 43 verbindet, welches entlang der Außenseite des Trägers verläuft. Jedes Band ist einteilig oder fest mit dem Träger ausgebildet, an verschiedenen Stellen entlang der vertikalen Seite des Trägers punktverschweißt. Das untere Ende eine jeden Metallbandes 43 ist an einer Verlängerung 29 befestigt, die wiederum mit einem unteren Trägerkanal 52 verbunden ist, was im folgenden, mit Bezug auf die untere Führung 18 und die untere Lagereinheit 12 beschrieben wird.

Der untere Trägerkanal 52 weist ein Paar von nach oben gerichteten Laschen oder Ohren 53 an seinen nach außen gerichteten beabstandeten Rändern auf. Jede dieser Laschen ist über Schrauben oder dergleichen Befestigungselemente an einer horizontalen Verlängerung 29 befestigt, welche den unteren Trägerkanal 52 mit dem Metallband 43 verbindet, das wiederum mit dem Träger 2 verbunden ist. Der untere Trägerkanal 52 ist im wesentlichen identisch mit dem oberen Trägerkanal 40 und hat eine im wesentlichen planare oder ebene Oberfläche, welche ein Paar von Öffnungen aufweist, um einen unteren Trägerstift 54 aufzunehmen. Der untere Trägerstift 54 ist nach unten hin gerichtet, wobei sich sein Kopf in Eingriff mit der oberen Oberfläche des unteren Trägerkanals 52 befindet. Unmittelbar unterhalb des unteren Trägerkanals 52 ist ein Satz von Zugstangen 56 vorgesehen, um den Träger mit benachbarten Trägern zu verbinden. Die Zugstangen 56 weisen Öffnungen zur Aufnahme des Trägerstiftes 54 auf.

Nahe des äußeren Endes des Trägerstiftes und unmittelbar unterhalb der Zugstange 56 weist die untere Lager- oder Trageinheit 12 ein Rad oder eine Rolle 58 auf. Das Rad 58 fährt entlang der nach außen gerichteten im wesentlichen planaren Oberfläche 24 dar unteren Führung 18, wenn der Träger 2 sich um das elliptische Karussell bewegt.

Die oberen und unteren Trägerstifte 38, 54 für einen Träger 52 bestimmen eine erste vertikale Ebene, wie dies in Fig. 2 mit A dargestellt ist, Die Rückwandung des Trägers bestimmt eine zweite vertikale Ebene B, die nach außen hin vor der ersten vertikalen Ebene A angeordnet ist. Die oberen und unteren Trägerkanäle 40, 52 und die korrespondierenden Verlängerungen 27, 29 befreien den Träger von Störungen an dar oberen und unteren Führung 16, 18 und ermöglichen es dem Träger, sich über die obere Führung 16 und unter die untere Führung 18 hinaus zu erstrecken, wie dies klar in Fig. 2 gezeigt ist.

Im folgenden wird der Betrieb der vorliegenden Erfindung näher beschrieben mit Bezug auf die obige Beschreibung und die Zeichnungen. Wenn das Karussell 4 sich in Bewegung oder in Betrieb befindet, wird das Transportrad 20 durch den Motor 6 in Drehung versetzt. Wenn sich das Transportrad 20 dreht, kommen die gekerbten Öffnungen 21 und die Trägerhülsen 50, die mit den oberen Lagereinheiten 10 verbunden sind, in Eingriff, wodurch die Träger 2 dazu gebracht werden, sich um das Karussell 4 zu bewegen. Wie in Fig. 3 gezeigt, greifen das Transportrad 20 und die Trägerhülse 50 im wesentliohen durchgehend an wenigstens einem der halbkreisförmigen Bereiche des elliptischen Karussells ineinander.

Mit jeder Trägerhülse 50 ist ein Paar von Zugstangen 42, 44 verbunden. Jede dieser Zugstangen 42, 44 erstreckt sich zwischen benachbarten Trägern und verbindet diese Träger derart miteinander, daß eine Bewegung, die auf einen der Träger ausgeübt wird, während des Eingriffs der Trägerhülse 50 mit dem Transportrad 20 diese Bewegung auf jeden der Träger ausgeübt wird und die Träger dazu zwingt, sich gleichförmig um das Karussell zu bewegen. Der Zugstangenstabilisator 46 erstreckt sich zwischen oberen Lagereinheiten 10, die mit einem üblichen Träger 2 verbunden sind und verbindet diese, um zur Versteifung des Trägers beizutragen und um ein Paar von Lager- oder Trageinheiten 10 dazu zu bringen, sich als eine Einheit um das Karussell herum zu bewegen.

Der obere und der untere Trägerkanal 40, 52 erstreckt sich im wesentlichen horizontal und geringfügig über jedem ihrer jeweiligen Paare von Trägerstiften 38, 54, wobei sie die erste vertikale Ebene A, die durch die oberen und unteren Trägerstifte 38, 54 vorgegeben ist, schneiden und kreuzen.

Die Träger sind an den oberen und unteren Trägerkanälen 40, 52 an einer Stelle befestigt, die außerhalb der ersten vertikalen Ebene angeordnet ist, die durch die oberen und unteren Trägerstifte 38, 54 vorgegeben ist. Bei Anordnung der Träger an dieser Stelle, relativ zu dem Karussellaufbau bzw. -oberbau, wird die Trägerhöhe nicht durch den verfügbaren Raum zwischen der oberen und der unteren Führung 16, 18 bestimmt.

Daher kann der Boden des Trägers 2 unterhalb der unteren Führung 18 angeordnet werden, im wesentlichen so nah am Fußboden wie gewünscht, so etwa ca. 2,5 cm oder dergleichen oberhalb des Bodens. Desgleichen kann das obere Ende bzw. die Oberseite des Trägers 2 oberhalb der oberen Führung 16 angeordnet werden. Bei Anwendungen, wo tiefe Decken vorhanden sind, kann die Oberseite des Trägers beispielsweise etwa 2,5 cm oder dergleichen von der Decke entfernt sein. Daher ist es möglich, mit dem Karussell und dem Träger der vorliegenden Erfindung den verfügbaren Lagerraum, der durch ein derartiges Drehkarussell vorgegeben wird, zu erhöhen, während bei einigen Anwendungen der verfügbare Raum zwischen Boden und Decke vollständig ausgenutzt werden kann.

Es versteht sich, daß die vorstehende Beschreibung sich nur auf ein bevorzugtes Ausführungsbeispiel der vorliegenden Erfindung bezieht, während die Erfindung selbstverständlich in anderen Formen verwirklicht werden kann. Obwohl die vorliegende Erfindung auf ein Oberantriebs-Horizontal-Karussell 4 gerichtet ist, welches die Träger über einen elliptischen Weg durch einen Drehtisch antreibt, der mit den Trägern an ihren oberen Lager- oder Trageinheiten 10 in Kontakt steht, versteht es sich und es ist klar, daß das Karussell statt eines Oberantriebs auch einen Unterantrieb aufweisen kann und daß die Antriebsmittel ebenfalls entweder mit den oberen und/oder unteren Trageinheiten in Kontakt stehen kann, ohne vom Gegenstand der vorliegenden Erfindung abzuweichen. Wenn natürlich die unteren Lager- oder Trageinheiten allein zur Bewegung der Träger ineinandergreifen, würden die oberen Trageinheiten selbstverständlich hinter die oberen Führungen haken oder in anderer Form greifen müssen, um die Träger daran zu hindern, umzukippen.

## Patentansprüche

1. Drehkarussell (4) mit
einer oberen und einer unteren Führungseinrichtung (16, 18),
mindestens einem Träger (2), der durch die obere und untere Führungseinrichtung (16, 18) in einem geschlossenen Pfad geführt wird, und mit
Antriebsmitteln (8) zum Antreiben des Trägers (2) entlang dem geschlossenen Pfad,
dadurch gekennzeichnet, daß
der Träger (2) wenigstens drei Führungspunkte auf den oberen und unteren Führungseinrichtungen (16, 18) aufweist und die Führungspunkte sich nicht auf einer geraden Linie befinden und eine erste, im wesentlichen vertikale Ebene (A) bilden,
und daß der Träger (2) eine im wesentlichen planare vertikale Rückwand aufweist, die eine zweite im wesentlichen vertikale Ebene (B) bildet, wobei die zweite vertikale Ebene (B) im wesentlichen parallel, aber nach außen hin von der ersten vertikalen Ebene (A) beabstandet ist, und wobei der Träger (2) einen oberen Endbereich aufweist, der sich über die obere Führungseinrichtung (16) erstreckt.

2. Drehkarussell nach Anspruch 1, dadurch gekennzeichnet, daß der Träger (2) einen unteren Endbereich aufweist, der sich unter die untere Führungseinrichtung (18) erstreckt.

3. Drehkarussell nach Anspruch 1 oder 2, dadurch gekennzeichnet, daß die obere Führungseinrichtung weiterhin eine obere Führung (16) und eine obere Trageinheit (10) aufweist, wobei die obere Trageinheit an der oberen Führung (16) geführt ist.

4. Drehkarussell nach einem der Ansprüche 1 bis 3, dadurch gekennzeichnet, daß die untere Führungseinrichtung weiterhin eine untere Führung (18) und eine untere Trageinheit (12) aufweist, wobei die untere Trageinheit (12) an der unteren Führung (18) geführt ist.

5. Drehkarussell nach Anspruch 3, dadurch gekennzeichnet, daß die obere Führung (16) ein rohrförmiges Teil (22) aufweist, wobei an dem rohrförmigen Teil (22) die obere Trageinheit (10) gelagert ist.

6. Drehkarussell nach Anspruch 5, dadurch gekennzeichnet, daß die obere Trageinheit (10) Eingriffsmittel aufweist, welche sich mit dem rohrförmigen Teil (22) der oberen Führungseinrichtung in Eingriff befinden.

7. Drehkarussell nach Anspruch 6, dadurch gekennzeichnet, daß die Eingriffsmittel ein Rad (36) aufweisen.

8. Drehkarussell nach einem der Ansprüche 4 bis 7, dadurch gekennzeichnet, daß die untere Trageinheit (12) weiterhin ein Teil aufweist, welches mit der unteren Führung (18) in Eingriff steht, wodurch der Träger (2) in einer gewünschten Ausrichtung gehalten wird.

9. Drehkarussell nach Anspruch 8, dadurch gekennzeichnet, daß das Eingriffsmittel ein Rad (58) oder eine Rolle ist.

10. Drehkarussell nach einem oder mehreren der vorhergehenden Ansprüche, gekennzeichnet durch einen oberen und einen unteren Trägerkanal (40, 52), wobei der obere Trägerkanal (40) zwischen der oberen Trageinheit (10) und dem Träger angeordnet ist, während der untere Trägerkanal (52) zwischen der unteren Trageinheit (12) und dem Träger (2) angeordnet ist, wobei der obere Trägerkanal (40) an der oberen Trageinheit (10) durch erste Befestigungsmittel befestigt ist und der untere Trägerkanal (52) an der unteren Trageinheit (12) durch zweite Befestigungsmittel befestigt ist.

11. Drehkarussell nach Anspruch 10, dadurch gekennzeichnet, daß die ersten und zweiten Befestigungsmittel Gelenk- oder Scharniermittel aufweisen.

12. Drehkarussell nach Anspruch 10, dadurch gekennzeichnet, daß das Gelenkmittel ein Trägerstift ist.

13. Drehkarussell nach einem der Ansprüche 10 bis 12, dadurch gekennzeichnet, daß die ersten und zweiten Befestigungsmittel die Führungspunkte bestimmen.

14. Drehkarussell nach einem oder mehreren der vorhergehenden Ansprüche, dadurch gekennzeichnet, daß die oberen und unteren Trägerkanäle (40, 52) im wesentlichen planar sind und sich von der ersten vertikalen Ebene zur zweiten vertikalen Ebene erstrecken.

15. Drehkarussell nach einem oder mehreren der vorhergehenden Ansprüche, dadurch gekennzeichnet, daß der obere und untere Trägerkanal (40, 52) im wesentlichen planar ist und die erste und zweite vertikale Ebene (A, B) schneidet.

16. Drehkarussell nach einem oder mehreren der vorhergehenden Ansprüche, gekennzeichnet durch
einen Rahmenkörper, der gleichzeitig eine obere und eine untere Führung (16, 18) umfaßt, wobei die obere und untere Führung einen geschlossenen Pfad bilden, über den sich eine Mehrzahl von Trägern (2) bewegt,
eine Mehrzahl von oberen und unteren Trageinheiten (10, 12), wobei die oberen Trageinheiten (10) an der oberen Führung (16) und die unteren Trageinheiten (12) an der unteren Führung (18) geführt werden, und jede der oberen und unteren Trageinheiten (10, 12) wenigstens einen Trägerstift aufweist,
wobei jeder der Träger (2) mit einer Vielzahl von Trägerstiften verbunden ist und die Vielzahl der Trägerstifte die erste vertikale Ebene (A) für jeden Träger (2) bilden,
wobei jeder Träger (2) eine im wesentlichen planare vertikale Rückwand aufweist, ein Paar von vertikalen Seitenwandungen und eine offene Front, wobei die Rückwandung die zweite vertikale Ebene (B) bildet, die parallel aber nach außen hin beabstandet von der ersten vertikalen Ebene (A) ist, wobei die Rück- und Seitenwandungen jeweils einen oberen und einen unteren Endbereich aufweisen, die obere und untere Ebenen bestimmen, wobei die obere Ebene durch den oberen Endbereich der Rück- und Seiten-wandungen und die untere Ebene durch den unteren Endbereich der unteren und Seitenwandungen bestimmt wird, wobei die obere Ebene des Trägers (2) vertikal über der oberen Führung (16) des Trägers (2) angeordnet ist und die untere Ebene des Trägers (2) vertikal unterhalb der unteren Führung (18) angeordnet ist.

## Claims

1. Rotary carousel (4) with
an upper and a lower guide device (16, 18),
at least one carrier (2) which is guided in a closed path by means of the upper and lower guide device (16, 18), and with
drive means (8) for driving the carrier (2) along the closed path,
characterized in that
the carrier (2) has at least three guide points on the upper and lower guide devices (16, 18) and the guide points are not disposed on a straight line and form a first substantially vertical plane (A),
and in that the carrier (2) comprises a substantially flat, vertical rear wall which forms a second substantially vertical plane (B), the second vertical plane (B) being substantially parallel to but spaced outwardly from the first vertical plane (A), and the carrier (2) comprising an upper end region which extends above the upper guide device (16).

2. Rotary carousel according to Claim 1, characterized in that the carrier (2) comprises a lower end region which extends below the lower guide device (18).

3. Rotary carousel according to Claim 1 or Claim 2, characterized in that the upper guide device furthermore comprises an upper guide (16) and an upper carrier unit (10), the upper carrier unit being guided on the upper guide (16).

4. Rotary carousel according to any one of Claims 1 to 3, characterized in that the lower guide device furthermore comprises a lower guide (18) and a lower carrier unit (12), the lower carrier unit (12) being guided on the lower guide (18).

5. Rotary carousel according to Claim 3, characterized in that the upper guide (16) comprises a tubular element (22), the upper carrier unit (10) being mounted on the tubular element (22).

6. Rotary carousel according to Claim 5, characterized in that the upper carrier unit (10) comprises engagement means which are in engagement with the tubular element (22) of the upper guide device.

7. Rotary carousel according to Claim 6, characterized in that the engagement means comprise a wheel (36).

8. Rotary carousel according to any one of Claims 4 to 7, characterized in that the lower carrier unit (12) furthermore comprises an element which is in engagement with the lower guide (18) and by means of which the carrier (2) is held in a desired orientation.

9. Rotary carousel according to Claim 8, characterized in that the engagement means is a wheel (58) or a roller.

10. Rotary carousel according to one or more of the preceding claims, characterized by an upper and a lower carrier channel (40, 52), the upper carrier channel (40) being disposed between the upper carrier unit (10) and the carrier, whereas the lower carrier channel (52) is disposed between the lower carrier unit (12) and the carrier (2), the upper carrier channel (40) being fixed to the upper carrier unit (10) by first fixing means and the lower carrier channel (52) being fixed to the lower carrier unit (12) by second fixing means.

11. Rotary carousel according to Claim 10, characterized in that the first and second fixing means comprise articulation or hinge means.

12. Rotary carousel according to Claim 10, characterized in that the articulation means is a support pin.

13. Rotary carousel according to any one of Claims 10 to 12, characterized in that the first and second fixing means define the guide points.

14. Rotary carousel according to one or more of the preceding claims, characterized in that the upper and lower carrier channels (40, 52) are substantially planar and extend from the first vertical plane towards the second vertical plane.

15. Rotary carousel according to one or more of the preceding claims, characterized in that the upper and lower carrier channel (40, 52) is substantially planar and intersects the first and second vertical planes (A, B).

16. Rotary carousel according to one or more of the preceding claims, characterized by a frame body which includes both an upper and a lower guide (16, 18), the upper and lower guides forming a closed path along which a plurality of carriers (2) moves,
a plurality of upper and lower carrier units (10, 12), the upper carrier units (10) being guided on the upper guide (16) and the lower carrier units (12) being guided on the lower guide (18) and each of the upper and lower carrier units (10, 12) comprising at least one support pin,
each of the carriers (2) being connected to a plurality of support pins and the plurality of support pins forming the first vertical plane (A) for each carrier (2),
each carrier (2) comprising a substantially planar vertical rear wall, a pair of vertical side walls and an open front, the rear wall forming the second vertical plane (B) which is parallel to but spaced outwardly from the first vertical plane (A), the rear and side walls comprising respective upper and lower end regions which define upper and lower planes, the upper plane being defined by the upper end region of the rear and side walls and the lower plane being defined by the lower end regions of the lower and side walls, the upper plane of the carrier (2) being disposed vertically above the upper guide (16) of the carrier (2) and the lower plane of the carrier (2) being disposed vertically below the lower guide (18).

## Revendications

1. Carrousel rotatif (**4**), avec
un dispositif de guidage supérieur et un dispositif de guidage inférieur (**16, 18**),
au moins un support (**2**), guidé au moyen des dispositifs de guidage supérieur et inférieur (**16, 18**), en suivant un chemin fermé, et
des moyens d'entraînement (**8**), pour l'entraînement du support (**2**) le long du chemin fermé
caractérisé en ce que
le support (**2**) présente au moins deux points de guidage sur les dispositifs de guidage supérieur et inférieur (**16, 18**), et les points de guidage ne se trouvent pas sur une ligne droite et constituent un premier plan (A) sensiblement vertical,
et en ce que le support (**2**) présente une paroi arrière sensiblement plane, constituant un deuxième plan (B) sensiblement vertical, le deuxième plan vertical (B) s'étendant sensiblement parallèlement, mais espacé vers l'extérieur, vis-à-vis du premier plan vertical (A), et le support (**2**) présentant une zone d'extrémité supérieure qui s'étend sur le dispositif de guidage supérieur (**16**).

2. Carrousel rotatif selon la revendication 1, caractérisé en ce que le support (**2**) présente une zone d'extrémité inférieure qui s'étend sous le dispositif de guidage inférieur (**18**).

3. Carrousel rotatif selon la revendication 1 ou 2, caractérisé en ce que le dispositif de guidage supérieur présente, en outre, un guidage supérieur (**16**) et une unité support supérieure (**10**), l'unité support supérieure étant guidée sur le guidage supérieur (**16**).

4. Carrousel rotatif selon l'une des revendications 1 à 3, caractérisé en ce que le dispositif de guidage inférieur présente, en outre, un guidage inférieur (**18**) et une unité support inférieure (**12**), l'unité support inférieure (**12**) étant guidée sur le guidage inférieur (**18**).

5. Carrousel rotatif selon la revendication 3, caractérisé en ce que le guidage supérieur (**16**) présente une partie tubulaire (**22**), l'unité support supérieure (**10**) étant montée sur la partie tubulaire (**22**).

6. Carrousel rotatif selon la revendication 5, caractérisé en ce que l'unité support supérieure (**10**) présente des moyens d'engagement se trouvant en contact avec la partie tubulaire (**22**) du dispositif de guidage supérieur.

7. Carrousel rotatif selon la revendication 6, caractérisé en ce que les moyens d'engagement présentent une roue (**36**).

8. Carrousel rotatif selon l'une des revendications 4 à 7, caractérisé en ce que l'unité support inférieure (**12**) présente, en outre, une partie qui vient en contact avec le guidage inférieur (**18**), faisant que le support (**2**) est maintenu dans l'orientation souhaitée.

9. Carrousel rotatif selon la revendication 3, caractérisé en ce que le moyen d'engagement est une roue (**58**) ou un galet.

10. Carrousel rotatif selon l'une ou plusieurs des revendications précédentes, caractérisé par un canal support supérieur et un canal support inférieur (**40, 52**), le canal support supérieur (**40**) étant disposé entre l'unité support supérieure (**10**) et le support, tandis que le canal support inférieur (**52**) est disposé entre l'unité support inférieure (**12**) et le support (**2**), le canal support supérieur (**40**) étant fixé sur l'unité support supérieure (**10**) à l'aide d'un premier moyen de fixation et le canal support inférieur (**52**) étant fixé sur l'unité support inférieure (**12**) à l'aide d'un deuxième moyen de fixation.

11. Carrousel rotatif selon la revendication 10, caractérisé en ce que les premier et deuxième moyens de fixation présentent des moyens à articulation ou à charnière.

12. Carrousel rotatif selon la revendication 10, caractérisé en ce que le moyen à articulation est une broche support.

13. Carrousel rotatif selon l'une des revendications 10 à 12, caractérisé en ce que les premier et deuxième moyens de fixation déterminent les points de guidage.

14. Carrousel rotatif selon l'une ou plusieurs des revendications précédentes, caractérisé en ce que les canaux supports supérieur et inférieur (**40, 52**) sont sensiblement plan et s'étendent du premier plan vertical au deuxième plan vertical.

15. Carrousel rotatif selon l'une ou plusieurs des revendications précédentes, caractérisé en ce que les canaux supports supérieur et inférieur (**40, 52**) sont sensiblement plan et coupent les premier et deuxième plans verticaux (A, B).

16. Carrousel rotatif selon l'une ou plusieurs des revendications précédentes, caractérisé par un corps formant cadre, comprenant simultanément un guidage supérieur et un guidage inférieur (**16, 18**), les guidages supérieur et inférieur constituant un chemin fermé, sur lequel se déplacent une pluralité de supports (**2**), caractérisé par
une pluralité d'unités supports supérieures et inférieures (**10, 12**), les unités supports supérieures (**10**) étant guidées sur le guidage supérieur (**16**) et les unités support inférieures (**12**) étant guidées sur le guidage inférieur (**18**), et chacune des unités supports supérieures et inférieures (**10, 12**) présentant au moins une broche support,
chacun des supports (**2**) étant reliés à une pluralité de broches supports et la pluralité de broches supports constituant le premier plan vertical (A) pour chaque support (**2**),
chaque support (**2**) présentant une paroi arrière sensiblement plane, une paire de parois latérales verticales et une face avant ouverte, la paroi arrière constituant le deuxième plan vertical (B), disposée parallèlement mais également espacée vers l'extérieur vis-à-vis du premier plan verticale (A), les parois arrière et latérales présentant chacune une zone d'extrémité supérieure et une zone d'extrémité inférieure, déterminant des plans supérieur et inférieur, le plan supérieur étant déterminé par la zone d'extrémité supérieure des parois arrière et latérales et le plan inférieur étant déterminé par la zone d'extrémité inférieure des parois inférieure et latérales, le plan supérieur du support (**2**) étant disposé verticalement au-dessus du guidage supérieur (**16**) du support (**2**) et le plan inférieur du support (**2**) étant disposé verticalement au-dessous du guidage inférieur (**18**).
